# EUROPÄISCHE PATENTSCHRIFT

(11) **EP 2 541 705 B1**
(45) Veröffentlichungstag und Bekanntmachung des Hinweises auf die Patenterteilung: **03.01.2018**
(21) Anmeldenummer: 12002377.5
(22) Anmeldetag: 29.03.2012
(51) Int. Cl.: H02G 3/04, A61H 1/02, A63B 69/00, A63G 31/16, G06F 3/01, A63B 71/06

(54) **Verfahren und Leitungsführungskanal zur Sicherstellung eines Potentialausgleichs**
Method and line guidance channel for equipotential bonding
Procédé et canal de guidage de ligne pour la sécurisation d'un équilibrage de potentiel

(30) Priorität: 08.04.2011 DE 102011016544
(43) Veröffentlichungstag der Anmeldung: 02.01.2013
(73) Patentinhaber: Tehalit GmbH, 67716 Heltersberg (DE)
(72) Erfinder: Szabó, Thomas, 66849 Landstuhl (DE); Dechert, Armin, 67707 Schopp (DE); Stamer, Gernot, 66879 Kottweiler-Schwanden (DE); Arnold, Hans-Joachim, 67706 Krickenbach (DE)
(74) Vertreter: Nuss, Laurent

(56) Entgegenhaltungen:
- EP-A1- 1 414 125
- DE-U1- 20 010 253
- DE-U1-202006 006 418

## Beschreibung

Die vorliegende Erfindung betrifft ein Verfahren zur Sicherstellung eines Potentialausgleichs bei einem zur Installation von elektrischen Geräten oder Leitungen ausgebildeten lackierten oder eloxierten Leitungsführungskanal aus Metall. Die Erfindung betrifft ferner einen Leitungsführungskanal aus Metall, vorzugsweise aus Aluminium, zur Installation elektrischer Geräte oder Leitungen, der zugleich einen Potentialausgleich sicherstellt.

Die Erdung von Leitungsführungskanälen aus Metall wie z. B. Installationskanälen oder Kabelkanälen stellt eine wichtige Maßnahme für die Sicherheit dar. Ein Leitungsführungskanal besteht aus einem Oberteil und einem Unterteil. Das Unterteil besitzt Deckelhalteprofile, welche mit am Oberteil ausgebildeten Formhalteprofilen kooperieren und so für einen sichern Halt des Oberteils auf dem Unterteil sorgen. Üblicherweise werden Leitungsführungskanäle aus Metall im Rahmen des Herstellungsprozesses lackiert oder eloxiert. Beim Eloxieren wird z. B. auf einem Aluminiumkanal eine oxidische Schutzschicht aufgetragen. Dies geschieht durch eine anodische Oxidation, bei der durch Umwandlung der obersten Metallzone ein Oxid bzw. Hydroxid gebildet wird. Auf diese Weise entsteht eine dünne Schicht, die den Leitungsführungskanal vor Korrosion schützt. Beim Lackieren wird ein flüssiger oder pulverförmiger Beschichtungsstoff auf den Leitungsführungskanal aufgetragen. Die schützende Wirkung einer Lackierung oder Eloxierung bei Kabelkanälen hat jedoch auch Nachteile, wenn es um den Potentialausgleich zwischen dem Oberteil und dem Unterteil des Leitungsführungskanals geht, da der Lack oder die Eloxalschicht eine einwandfreie elektrische Kontaktierung verhindert.

Es existieren etliche Lösungen, bei denen zur Sicherstellung eines Potentialausgleichs zwischen Oberteil und Unterteil eines Kabelkanals getrennte Einbauteile oder Erdungselemente verwendet werden, die über scharfe Zungen oder Kanten verfügen, welche sich in das Material des Kanals durch die Lackschicht oder Eloxalschicht hineinschneiden, um so eine Kontaktierung zu ermöglichen.

In der DE 295 08 312 U1 ist beispielsweise eine Vorrichtung zum Potentialausgleich beschrieben, bei der das Potentialausgleichselement in die Kabelhalteklammer verlagert ist. Die freien Klammerenden der Kabelhalteklammer sind hierbei mit scharfen Kontaktspitzen versehen, die bei der Verklammerung mit den freien, profilierten Enden der Seitenwände des Kanalunterteils zur Herstellung der elektrisch leitenden Verbindung deren Oberfläche gezielt beschädigen. Auf diese Weise wird der Kanaldeckel mit dem Kanalunterteil elektrisch verbunden. Nachteilig ist bei dieser Konstruktion, dass ein getrenntes Montageteil (nämlich die Kabelhalteklammer) notwendig ist und dass sich der Monteur an den scharfen Kontaktspitzen verletzen kann.

Ähnliche Probleme bestehen auch bei anderen bekannten Vorrichtungen zum Potentialausgleich, wie sie beispielsweise in der DE 299 15 093 U1, der DE 297 11 068 U1, der DE 36 33 604 A1 oder der DE 36 42 896 A1 beschrieben sind. In der DE 298 17 946 U1 wird ein alternatives Anschlusselement aus Blech beschrieben, das im Kanalquerschnitt mit dessen Seitenkanten verklemmt und an der der Kanalöffnung zugewandten Seite mit mindestens einem von der Seitenkante abgebogenen Zahn versehen ist. Durch diese Ausgestaltung wird durch den sich in die Oberfläche eines Teils des Kanalprofils eingrabenden Zahn eine Kontaktierung gesichert. Eine ähnliche Lösung unter Verwendung einer Rastklammer ist in der DE 40 24 293 C2 beschrieben. Diese Lösungen benötigen ein getrenntes Übertragungselement, das für den Potentialausgleich und damit die Erdungsfunktion bei dem Leitungsführungskanal sorgen. Nachteilig bei diesen Lösungen ist ferner die zum Teil recht aufwändige Montage. Ferner wird ein zusätzliches Bauteil bei der Montage benötigt. Durch die oftmals verwendeten scharfen Zungen oder Kanten ist auch eine Verletzungsgefahr für den Monteur bei der Montage gegeben. All dies ist unbefriedigend, so dass Lösungen, die ohne getrenntes Potentialausgleichselement auskommen, erwünscht sind.

Leider genügt es nicht, nur für eine Kontaktierung an einer Stelle zwischen dem Oberteil oder Unterteil zu sorgen. Bei einem Potentialausgleich müssen vorgeschriebene Leitwerte eingehalten werden, das heißt es muss eine elektrische Verbindung sichergestellt sein, die die Körper elektrischer Betriebsmittel und fremde leitfähige Teile auf gleiches oder annähernd gleiches Potential bringt. Somit müssen zwischen dem Oberteil und dem Unterteil stets gut leitfähige Verbindungen sichergestellt sein.

Eine Lösung, die beispielsweise ohne separates Anschlusselement für den Potentialausgleich auskommt, ist in der DE 20 2006 006 418 U1 beschriebene Oberteilerdung für einen Kabelkanal. Bei dieser Lösung ist eine aus dem Formhalteprofilen des Oberteils freigeschnittene, nach außen gerichtete Erdungsfahne vorgesehen, welche beim Aufsetzen des Oberteils auf das Unterteil durch die Lackschicht kratzt und so für die elektrische Kontaktierung sorgt. Je nach Winkelstellung der Erdungsfahne und Verformungsgrad des Leitungsführungskanals ist jedoch die Verbindung mehr oder weniger gut.

In der EP 1 081 820 A1 wird eine Vorrichtung zur Herstellung des Potentialausgleichs in Leitungsführungskanälen beschrieben, bei der scharfe Kanten und/oder Spitzen Oberflächenbeschichtungen oder Oxidschichten vom Kanalunterteil oder Kanaldeckel durchschneiden und so für eine niederohmige elektrische Verbindung sorgen.

Grundsätzlich sind Lösungen, bei denen eine bereits aufgetragene Lackschicht oder Eloxalschicht eingekratzt oder entfernt werden muss, sei es über ein getrenntes Anschlusselement oder durch andere Lösungen, nicht ideal, da nicht hundertprozentig sichergestellt werden kann, dass an der Kratzstelle die erforderlichen Leitwerte erzielt werden.

In der DE 100 00 849 C1 wird ein Verfahren zur Beschichtung von Kabelkanälen beschrieben, bei dem das Vorderteil und der Deckel in einem ersten Verfahrensschritt mit einer Pulverbeschichtung versehen werden und in einem zweiten Verfahrensschritt die Pulverbeschichtung eingebrannt wird. In einem weiteren Zwischenschritt, der zwischen dem ersten und dem zweiten Verfahrensschritt angeordnet ist, werden Bereiche der Verriegelungskonturen von der Pulverbeschichtung wieder befreit, um einen Potentialausgleich zu bewirken.

In der DE 200 10 253 U1 wird ein Kabelkanal beschrieben, bei dem die aneinander liegenden Flächen der Verriegelungskonturen frei von Beschichtungsmaterial, insbesondere frei von Pulverbeschichtung sind. Ein ähnliches Vorgehen ist auch in der EP 1 414 125 A1 beschrieben.

Das Entfernen der Pulverbeschichtung stellt regelmäßig einen eigenen Arbeitsschritt dar, den es zu vereinfachen gilt. Das Abkratzen einer Pulverbeschichtung ist sehr aufwändig. Es muss sichergestellt sein, dass die erforderliche niederohmige Verbindung tatsächlich besteht, d. h. es dürfen keine Oxid- oder Lackreste an der Kontaktstelle verbleiben.

Vor diesem Hintergrund ist es Aufgabe der vorliegenden Erfindung, ein verbessertes Verfahren zur Sicherstellung eines Potentialausgleichs bei einem zur Installation von elektrischen Geräten oder Leitungen ausgebildeten lackierten oder eloxierten Leitungsführungskanal aus Metall bereitzustellen, mit dem die Pulverbeschichtung effizient und mit der erforderlichen Gründlichkeit entfernbar ist.

Diese Aufgabe wird gelöst durch ein Verfahren mit den Merkmalen des Anspruchs 1. Die Erfindung betrifft ferner einen mit dem Verfahren hergestellten Leitungsführungskanal.

Bevorzugte Ausführungsformen finden sich in den Unteransprüchen wieder.

Das erfindungsgemäße Verfahren zur Sicherstellung eines Potentialausgleichs bei einem zur Installation von elektrischen Geräten oder Leitungen ausgebildeten lackierten oder eloxierten Leitungsführungskanal aus Metall sieht vor, dass die Lackschicht oder Eloxalschicht als Streifen oder punktuell entlang an den Deckelhalteprofilen des Unterteils sowie an den Formhalteprofilen am Oberteil ausgebildeten Kontaktlinien zur elektrischen Kontaktierung mit einem Laser entfernt wird. Der erfindungsgemäße Leitungsführungskanal aus Metall besteht aus einem Oberteil mit seitlichen Formhalteprofilen und einem U-förmigen Unterteil mit seitlichen Deckelhalteprofilen zum Halten des Oberteils über die Formhalteprofile. Die Deckelhalteprofile des Unterteils und die Formhalteprofile des Oberteils kooperieren derart, dass das Oberteil fest auf dem Unterteil gehalten wird und sorgen über einen Klemmmechanismus gleichzeitig für die elektrische Kontaktierung über sich berührende lackfreie oder eloxalfreie Kontaktflächen zwischen dem Oberteil und dem U-förmigen Unterteil des Leitungsführungskanals. Die stabile mechanische Verbindung trägt gleichzeitig zu einem stabilen elektrischen Potentialausgleich bei.

In einer Ausführungsform kann vorgesehen sein, dass die Lackschicht oder Eloxalschicht als durchgehender oder unterbrochener Streifen an den Deckelhalteprofilen des Oberteils und den Formhalteprofilen des Unterteils entlang der Kontaktlinien entfernt wird. Vorzugsweise sind die Streifen am Oberteil oder Unterteil entlang der Kontaktlinien durchgehend, um leichte Unebenheiten oder Verformungen des Leitungsführungskanals auszugleichen und dennoch für eine einwandfreie elektrische Kontaktierung zu sorgen.

Die Entfernung mit dem Laser ist vorteilhaft, da der Laser von oben in das Unterteil und entlang der Deckelhalteprofile zur Erzeugung der Kontaktstreifen geführt werden kann. Beim Oberteil erfolgt die Erzeugung der Kontaktstreifen durch einfaches Drehen des Oberteils oder durch Entlangfahren des Lasers an einem Formschenkel des Formhalteprofils des Oberteils.

Dem Profil und Aufbau der erfindungsgemäß ausgestalteten Formhalteprofile des Oberteils und der Deckelhalteprofile des Unterteils kommt eine besondere Bedeutung zu, da die gewählte Profilgestaltung nicht nur für eine einwandfreie elektrische Kontaktierung für den Potentialausgleich sorgt, sondern auch einen sicheren Halt des Oberteils zum Unterteil gewährleistet. Durch die erfindungsgemäße Ausgestaltung der Formhalteprofile des Oberteils und der Deckelhalteprofile des Unterteils werden somit wenigstens zwei Funktionen erfüllt: der sichere elektrische Potentialausgleich und die stabile mechanische Verbindung zwischen Oberteil und Unterteil.

Die Formhalteprofile des Oberteils bestehen aus mehreren U-förmig zueinander angeordneten Formschenkeln, wobei der äußere (d.h. zur Kanalaußenseite weisende) Formschenkel vorzugsweise leicht nach innen gebogenen ist, um, zumindest in einigen Ausführungsformen, eine Kontaktzone für den elektrischen Potentialausgleich zu bilden.

Die Deckelhalteprofile des Unterteils sind schlaufenförmig ausgebildet, wobei die Kontaktlinien grundsätzlich an sich berührenden Flächen von Schenkeln der Formhalteprofile und Deckelhalteprofile ausgebildet sind. In einer ersten Ausführungsform ist die Kontaktlinie beim Oberteil am Ende eines Formschenkels des Formhalteprofils ausgebildet und die korrespondierende weitere Kontaktlinie beim Untereil in der Scheitelsohle des schlaufenartig ausgebildeten Deckhalteprofils. In einer weiteren Ausführungsform weist der äußere Profilschenkel des Deckelhalteprofils einen Streifen als Kontaktlinie auf. Der äußere Formschenkel des Formhalteprofils des Oberteils weist die korrespondierende weitere Kontaktlinie auf.

Die U-förmige Ausgestaltung der Formhalteprofile des Oberteils ermöglicht die Aufnahme des schlaufenförmigen Profilschenkels des Unterteils. Die Formschenkel des Oberteils bilden dabei eine Art Kammer, in welche der Profilschenkel des Unterteils eingeklemmt wird. Beim Aufsetzen des Oberteils auf das Unterteil klemmt sich ein Formschenkel des Formhalteprofils des Oberteils gegen die Profilschenkel des Deckelhalteprofils des Unterteils. Dadurch wird der äußere Profilschenkel des Deckelhalteprofils nach oben gedrückt, wodurch die beiden Kontaktlinien am Formhalteprofil des Oberteils und am Deckelhalteprofil des Unterteils gegeneinander gepresst werden, so dass eine einwandfreie Kontaktierung einsteht. Die Verklemmung erfolgt also vorzugsweise dadurch, dass ein Schenkelelement des Formhalteprofils des Oberteils von unten gegen die Profilschenkel des Deckhalteprofils drückt, wodurch die ersten und zweiten Kontaktlinien aneinander gepresst werden.

Die seitlichen Deckelhalteprofile des Unterteils sind aus drei U-förmig angeordneten Profilschenkeln schlaufenförmig ausgebildet und die seitlichen Formhalteprofile des Oberteils aus drei U-förmig angeordneten Formschenkeln geformt.

Im montierten Zustand des Oberteils und des Unterteils bilden die beiden Profile also eine Kammer, in der die ersten und zweiten Kontaktlinien angeordnet sind, wobei die Kammer von den Profilschenkel des Deckelhalteprofils des Unterteils und den Formschenkeln des Formhalteprofils des Oberteils ausgebildet ist. Auf diese Weise ist die Kontaktzone geschützt.

Die Erfindung wird in den nachfolgenden Zeichnungen näher erläutert.

Es zeigen:
- Fig. 1: eine Seitendarstellung einer Ausführungsform des erfindungsgemäßen Leitungsführungskanals mit Unterteil und einem darauf aufgesetzten Oberteil,
- Fig. 2: eine Seitendarstellung des erfindungsgemäßen Leitungsführungskanals mit getrenntem Oberteil und Unterteil.

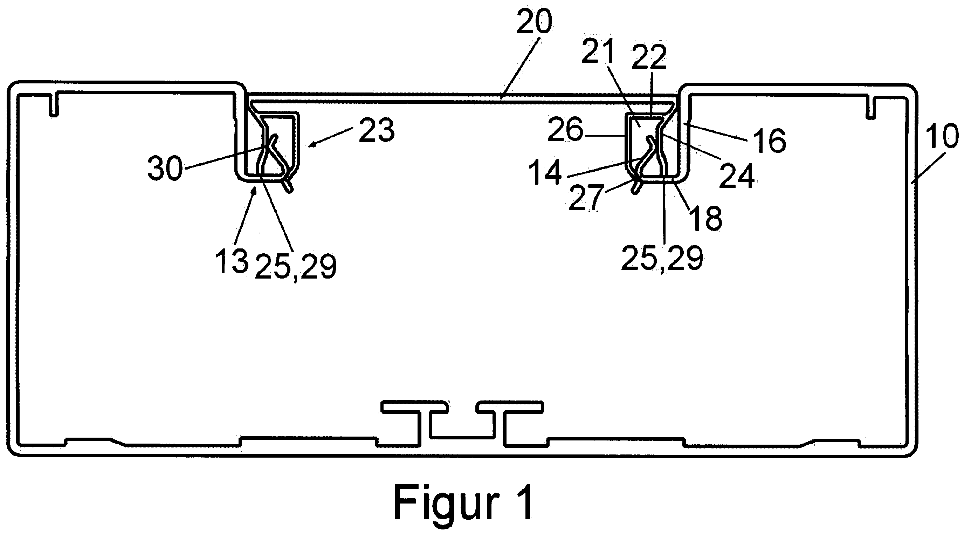

In Fig. 1 ist der erfindungsgemäße Aufbau der Formhalteprofile 23 des Oberteils 20 sowie der Deckelhalteprofile 13 des Unterteils 10 gezeigt. Die Formhalteprofile 23 des Oberteils 20 bestehen aus mehreren Formschenkeln 22, 24, 26, die U-förmig zueinander angeordnet sind und eine Kammer 21 bilden.

Am Ende eines Seitenwandprofils 16 des Unterteils 10 sind die Deckelhalteprofile 13 ausgebildet. Die Deckelhalteprofile 13 werden von Profilschenkeln 14 und 18 gebildet. Der Profilschenkel 14 wird beim Aufsetzen des Oberteils 20 auf das Unterteil 10 in die von den Formschenkeln 22, 24, 26 gebildete Kammer 21 geführt. Dabei geschieht Folgendes: der innere Schenkel 26 des Formhalteprofils 23 ist am Fußende abgewinkelt und besitzt ein Schenkelelement 27, das sich beim Aufsetzen des Oberteils 20 auf das Unterteil 10 von unten gegen die Profilschenkel 14, 18 des Unterteils 10 schiebt. Dadurch wird der Profilschenkel 18 nach oben gegen das Fußende des Formschenkels 24 gedrückt. Für den Potentialausgleich ist eine erste Kontaktlinie 29 am Fußende des Formschenkels 24 ausgebildet und eine zweite korrespondierende Kontaktlinie 25 in der Scheitelsohle des Profilschenkels 18 des Deckelhalteprofils 13 (vgl. Abbildung rechts).

Eine weitere Variante ist in der Abbildung links gezeigt. Hier wird der Profilschenkel 14 gegen den Formschenkel 24 gedrückt und bildet eine alternative Kontaktzone 30. Man erkennt ferner, dass die Kammer 21 durch den äußeren Profilschenkel 14 des Deckelhalteprofils 13 geteilt wird. Diese Kammerstruktur besitzt den weiteren Vorteil, die Kontaktzone 30 vor äußeren Einflüssen (z. B. Nässe, mechanische Einwirkung) zu schützen.

Der sich unter den Profilschenkel 18 schiebende weitere Formschenkel 26 sorgt somit nicht nur für eine einwandfreie elektrische Kontaktierung an den Kontaktlinien 25, 29 und/oder der Kontaktzone 30, sondern auch für einen sicheren Halt des Oberteils 20 mit dem Unterteil 10. Dadurch sind auch mögliche Relativbewegungen des Oberteils unproblematisch, da der äußere Profilschenkel 14 und der äußere Formschenkel 24 gegeneinander wirken und so stets für eine einwandfreie elektrische Kontaktierung sorgen.

In einer anderen Ausführungsform kann vorgesehen sein, dass auch im Bereich der Kontaktstelle des Schenkelelements 27 eine elektrische Kontaktierung erfolgt, indem an dieser Stelle eine weitere (oder einzige) Kontaktlinie ausgebildet ist.

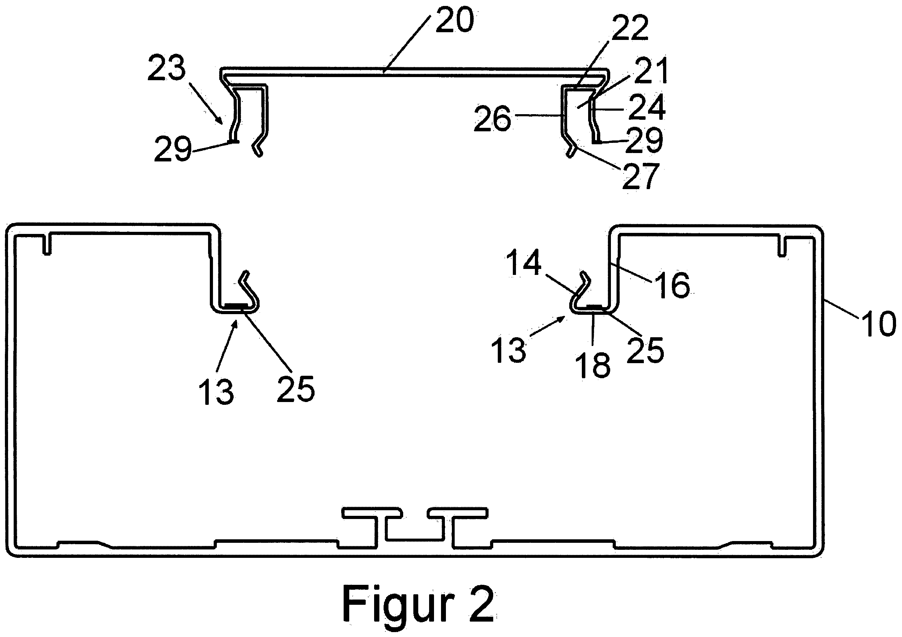

In Fig. 2 ist der erwähnte Aufbau nochmals in Einzeldarstellung des Oberteils 20 bzw. des Unterteils 10 gezeigt.

## Patentansprüche

1. Verfahren zur Sicherstellung eines Potentialausgleichs bei einem zur Installation von elektrischen Geräten oder Leitungen ausgebildeten lackierten oder eloxierten Leitungsführungskanal aus Metall, bestehend aus einem Oberteil (20) mit seitlichen Formhalteprofilen (23) und einem U-förmigen Unterteil (10) mit seitlichen Deckelhalteprofilen (13) zum Halten des Oberteils (20) über die Formhalteprofile (23), bei dem eine elektrische Kontaktierung über sich berührende lackfreie oder eloxalfreie Kontaktflächen zwischen dem Oberteil (20) und dem U-förmigen Unterteil (10) des Leitungsführungskanals erfolgt, wobei die Lackschicht oder Eloxalschicht als Streifen oder punktuell entlang an den Deckelhalteprofilen (13) des Unterteils (10) sowie an den Formhalteprofilen (23) am Oberteil (20) ausgebildeten Kontaktlinien (25, 29) zur elektrischen Kontaktierung entfernt wird, **dadurch gekennzeichnet, dass** die Entfernung der Lackschicht oder Eloxalschicht entlang der Kontaktlinien (25, 29) über einen Laser erfolgt.

2. Verfahren nach Anspruch 1, **dadurch gekennzeichnet, dass** die Lackschicht oder Eloxalschicht als durchgehender und/oder unterbrochener Streifen an den Formhalteprofilen (23) des Oberteils (20) und den Deckelhalteprofilen (13) des Unterteils (10) entlang der Kontaktlinien (25, 29) entfernt wird.

3. Verfahren nach einem der Ansprüche 1 bis 2, **dadurch gekennzeichnet, dass** die seitlichen Deckelhalteprofile (13) des Unterteils (10) aus drei U-förmig angeordneten Profilschenkeln (14,18) schlaufenförmig ausgebildet und die seitlichen Formhalteprofile (23) des Oberteils (20) aus drei U-förmig angeordneten Formschenkeln (22, 24, 26) geformt werden, wodurch eine Kammer (21) zur Aufnahme eines äußeren Profilschenkels (14) des Deckelhalteprofils (13) gebildet wird, wobei die erste Kontaktlinie (29) am Fußende des äußeren Formschenkels (24) des Formhalteprofils (23) des Oberteils (20) und die zweite Kontaktlinie (25) in der Scheitelsohle des unteren Profilschenkels (18) des Deckelhalteprofils (13) des Unterteils (10) ausgebildet werden.

4. Verfahren nach einem der Ansprüche 1 bis 3, **dadurch gekennzeichnet, dass** eine alternative oder zusätzliche Kontaktzone (30) zwischen der Innenseite des Formschenkels (24) des Formhalteprofils (23) und der Innenseite des Profilschenkels (14) ausgebildet wird.

5. Verfahren nach einem der Ansprüche 1 bis 4, **dadurch gekennzeichnet, dass** die Formgebung der Formschenkel (22, 24, 26) der Formhalteprofile (23) des Oberteils (20) so erfolgt, dass beim Aufsetzen des Oberteils (20) auf das Unterteil (10) ein Schenkelelement (27) des inneren Formschenkels (26) des Formhalteprofils (23) von unten gegen die Profilschenkel (14, 18) des Deckelhalteprofils (13) des Unterteils (10) drückt, wodurch die Kontaktlinien (25, 29) des Oberteils (20) und des Unterteils (10) aneinander gepresst werden.

6. Leitungsführungskanal aus Metall zur Installation elektrischer Geräte und Leitungen, umfassend ein U-förmiges Unterteil (10) mit seitlichen Deckelhalteprofilen (13), die mit Formhalteprofilen (23) eines Oberteils (20) kooperieren, wobei die Deckelhalteprofile (13) durch Profilschenkel (14,16,21) schlaufenförmig und die Formhalteprofile (23) über Formschenkel (22, 24, 26) U-förmig ausgestaltet sind, wobei am Fußende des äußeren Formschenkels (24) des Formhalteprofils (23) eine erste lackfreie oder eloxalfreie Kontaktlinie (29) und in der Scheitelsohle des unteren Profilschenkels (18) des Deckelhalteprofils (13) eine zweite lackfreie oder eloxalfreie Kontaktlinie (25) als Streifen ausgebildet ist, und ein Schenkelelement (27) des Formhalteprofils (23) des Oberteils (20) von unten gegen die Profilschenkel (14,16,21) des Deckelhalteprofils (13) drückt, wodurch die erste und zweite Kontaktlinie (25, 29) aneinandergepresst sind, wobei die seitlichen Deckelhalteprofile (13) des Unterteils (10) aus drei U-förmig angeordneten Profilschenkeln (14,16,21) schiaufenförmig ausgebildet und die seitlichen Formhalteprofile (23) des Oberteils (20) aus drei U-förmig angeordneten Formschenkeln (22, 24, 26) geformt sind, **dadurch gekennzeichnet dass** eine Kammer (21) zur Aufnahme des äußeren Schenkels (14) des Deckelhalteprofils (13) ausgebildet ist, und dass zwischen der Innenseite des Formschenkels (24) des Formprofils (23) und der Innenseite des Profilschenkels (14) des Deckelhalteprofils (13) eine weitere Kontaktzone (30) ausgebildet ist.

7. Leitungsführungskanal nach Anspruch 6, **dadurch gekennzeichnet, dass** der Leitungsführungskanal aus Aluminium besteht.

## Claims

1. Method for ensuring a potential equalization in a lacquered or anodized line guidance duct composed of metal designed for the installation of electrical appliances or lines, composed of an upper part (20) with lateral shaped holding profiles (23) and of a U-shaped lower part (10) with lateral cover holding profiles (13) for holding the upper part (20) by way of the shaped holding profiles (23), in the case of which electrical contracting is realized via touching lacquer-free or non-anodized contact surfaces between the upper part (20) and the U-shaped lower part (10) of the line guidance duct, wherein the lacquer layer or anodized layer is removed as a strip or in punctiform fashion along contact lines (25, 29) for electrical contacting which are formed on the cover holding profiles (13) of the lower part (10) and on the shaped holding profiles (23) on the upper part (20), **characterized in that** the removal of the lacquer layer or anodized layer along the contact lines (25, 29) is performed by means of a laser.

2. Method according to Claim 1, **characterized in that** the lacquer layer or anodized layer is removed along the contact lines (25, 29) as a continuous and/or interrupted strip on the shaped holding profiles (23) of the upper part (20) and the cover holding profiles (13) of the lower part (10).

3. Method according to either of Claims 1 and 2, **characterized in that** the lateral cover holding profiles (13) of the lower part (10) are formed in a loop-shaped manner from three profile limbs (14, 18) arranged in U-shaped fashion, and the lateral shaped holding profiles (23) of the upper part (20) are formed from three shaped limbs (22, 24, 26) arranged in U-shaped fashion, whereby a chamber (21) for receiving an outer profile limb (14) of the cover holding profile (13) is formed, wherein the first contact line (29) is formed at the foot end of the outer shaped limb (24) of the shaped holding profile (23) of the upper part (20), and the second contact line (25) is formed at the apex base of the lower profile limb (18) of the cover holding profile (13) of the lower part (10) .

4. Method according to one of Claims 1 to 3, **characterized in that** an alternative or additional contact zone (30) is formed between the inner side of the shaped limb (24) of the shaped holding profile (23) and the inner side of the profile limb (14).

5. Method according to one of Claims 1 to 4, **characterized in that** the shaping of the shaped limbs (22, 24, 26) of the shaped holding profiles (23) of the upper part (20) is performed such that, when the upper part (20) is set down onto the lower part (10), a limb element (27) of the inner shaped limb (26) of the shaped holding profile (23) presses from below against the profile limb (14, 18) of the cover holding profile (13) of the lower part (10), whereby the contact lines (25, 29) of the upper part (20) and of the lower part (10) are pressed against one another.

6. Line guidance duct composed of metal for the installation of electrical appliances and lines, comprising a U-shaped lower part (10) with lateral cover holding profiles (13) which cooperate with shaped holding profiles (23) of an upper part (20), wherein the cover holding profiles (13) are formed in a loop-shaped manner by means of profile limbs (14, 16, 21) and the shaped holding profiles (23) are formed in a U-shaped manner by means of shaped limbs (22, 24, 26), wherein a first lacquer-free or non-anodized contact line (29) is formed as a strip at the foot end of the outer shaped limb (24) of the shaped holding profile (23), and a second lacquer-free or non-anodized contact line (25) is formed as a strip in the apex base of the lower profile limb (18) of the shaped holding profile (13), and a limb element (27) of the shaped holding profile (23) of the upper part (20) presses from below against the profile limb (14, 16, 21) of the cover holding profile (13), whereby the first and second contact lines (25, 29) are pressed against one another, wherein the lateral cover holding profiles (13) of the lower part (10) are formed in a loop-shaped manner from three profile limbs (14, 16, 21) arranged in a U-shaped manner, and the lateral shaped holding profiles (23) of the upper part (20) are formed from three shaped limbs (22, 24, 26) arranged in a U-shaped manner, **characterized in that** a chamber (21) for receiving the outer limb (14) of the cover holding profile (13) is formed, and **in that** a further contact zone (30) is formed between the inner side of the shaped limb (24) of the shaped profile (23) and the inner side of the profile limb (14) of the cover holding profile (13).

7. Line guidance duct according to Claim 6, **characterized in that** the line guidance duct is composed of aluminium.

## Revendications

1. Procédé de sécurisation d'un équilibrage de potentiel pour un caniveau de câblage en métal peint ou anodisé destiné à l'installation de lignes ou appareils électriques et constitué d'une partie supérieure (20) avec des profilés de maintien façonnés latéraux (23) et d'une partie inférieure (10) en forme de U avec des profilés latéraux (13) de maintien de couvercle destinés à maintenir la partie supérieure (20) par l'intermédiaire des profilés de maintien façonnés (23), selon lequel une mise en contact électrique s'effectue entre la partie supérieure (20) et la partie inférieure (10) en forme de U par l'intermédiaire de surfaces de contact exemptes de peinture ou exemptes d'anodisation, sachant que la couche de peinture ou la couche d'anodisation est, pour la mise en contact électrique, éliminée sous forme de bande ou ponctuellement le long de lignes de contact (25, 29) formées sur les profilés (13) de maintien de couvercle de la partie inférieure (10) ainsi que sur les profilés de maintien façonnés (23) de la partie supérieure (20), **caractérisé en ce que** l'élimination de la couche de peinture ou de la couche d'anodisation le long des lignes de contact (25, 29) s'effectue au moyen d'un laser.

2. Procédé selon la revendication 1, **caractérisé en ce que** la couche de peinture ou la couche d'anodisation est éliminée sous forme de bande continue et/ou interrompue le long des lignes de contact (25, 29) sur les profilés de maintien façonnés (23) de la partie supérieure (20) et les profilés (13) de maintien de couvercle de la partie inférieure (10).

3. Procédé selon la revendication 1 ou 2, **caractérisé en ce que** les profilés latéraux (13) de maintien de couvercle de la partie inférieure (10) sont réalisés sous forme de boucles à partir de trois branches profilées (14, 18) disposées en forme de U, et les profilés de maintien façonnés latéraux (23) de la partie supérieure (20) sont formés à partir de trois branches façonnées (22, 24, 26) disposées en forme de U, de sorte qu'une chambre (21) est formée pour recevoir une branche profilée extérieure (14) du profilé (13) de maintien de couvercle, sachant que la première ligne de contact (29) est formée à l'extrémité de pied de la branche façonnée extérieure (24) du profilé de maintien façonné (23) de la partie supérieure (20), et que la deuxième ligne de contact (25) est formée dans la base de sommet de la branche profilée inférieure (18) du profilé (13) de maintien de couvercle de la partie inférieure (10).

4. Procédé selon l'une des revendications 1 à 3, **caractérisé en ce qu'**une zone de contact alternative ou supplémentaire (30) est formée entre le côté intérieur de la branche façonnée (24) du profilé de maintien façonné (23) et le côté intérieur de la branche profilée (14).

5. Procédé selon l'une des revendications 1 à 4, **caractérisé en ce que** le façonnage des branches façonnées (22, 24, 26) des profilés de maintien façonnés (23) de la partie supérieure (20) s'effectue de telle sorte que, lors de la mise en place de la partie supérieure (20) sur la partie inférieure (10), un élément de branche (27) de la branche façonnée intérieure (26) du profilé de maintien façonné (23) exerce une pression par le bas contre les branches profilées (14, 18) du profilé (13) de maintien de couvercle de la partie inférieure (10), de sorte que les lignes de contact (25, 29) de la partie supérieure (20) et de la partie inférieure (10) sont pressées l'une contre l'autre.

6. Caniveau de câblage en métal pour l'installation de lignes et appareils électriques, comprenant une partie inférieure (10) en forme de U avec des profilés latéraux (13) de maintien de couvercle qui coopèrent avec des profilés de maintien façonnés (23) d'une partie supérieure (20), sachant que les profilés (13) de maintien de couvercle sont réalisés sous forme de boucles par des branches profilées (14, 16, 21) et que les profilés de maintien façonnés (23) sont réalisés en forme de U au moyen de branches façonnées (22, 24, 26), sachant qu'une première ligne de contact (29) exempte de peinture ou exempte d'anodisation est formée à l'extrémité de pied de la branche façonnée extérieure (24) du profilé de maintien façonné (23) et qu'une deuxième ligne de contact (25) exempte de peinture ou exempte d'anodisation est réalisée sous forme de bande dans la base de sommet de la branche profilée inférieure (18) du profilé (13) de maintien de couvercle, et qu'un élément de branche (27) du profilé de maintien façonné (23) de la partie supérieure (20) exerce une pression par le bas contre les branches profilées (14, 16, 21) du profilé (13) de maintien de couvercle, de sorte que la première et la deuxième lignes de contact (25, 29) sont pressées l'une contre l'autre, sachant que les profilés latéraux (13) de maintien de couvercle de la partie inférieure (10) sont réalisés sous forme de boucles à partir de trois branches profilées (14, 16, 21) disposées en forme de U et que les profilés de maintien façonnés latéraux (23) de la partie supérieure (20) sont formés à partir de trois branches façonnées (22, 24, 26) disposées en forme de U, **caractérisé en ce qu'**une chambre (21) est formée pour recevoir la branche extérieure (14) du profilé (13) de maintien de couvercle, et **en ce qu'**une zone de contact supplémentaire (30) est formée entre le côté intérieur de la branche façonnée (24) du profilé façonné (23) et le côté intérieur de la branche profilée (14) du profilé (13) de maintien de couvercle.

7. Caniveau de câblage selon la revendication 6, **caractérisé en ce que** le caniveau de câblage est constitué d'aluminium.
